Europäisches Patentamt

European Patent Office

Office européen des brevets

(11) Veröffentlichungsnummer: **0 023 622**
**A1**

## (12) EUROPÄISCHE PATENTANMELDUNG

(21) Anmeldenummer: 80104109.6

(22) Anmeldetag: 15.07.80

(51) Int. Cl.³: **H 02 P 7/28**

(30) Priorität: 30.07.79 DE 2930907

(43) Veröffentlichungstag der Anmeldung: 11.02.81
Patentblatt 81/6

(84) Benannte Vertragsstaaten: **CH DE FR GB IT LI**

(71) Anmelder: **SIEMENS AKTIENGESELLSCHAFT Berlin
und München, Postfach 22 02 61,
D-8000 München 22 (DE)**

(72) Erfinder: **Siebert, Jürgen, Dr., Mühlweg 31,
D-8521 Uttenreuth (DE)**

(54) **Verfahren zur Pulsbreitensteuerung eines Gleichstrom-Umkehrstellers und Schaltungsanordnung zur Durchführung des Verfahrens.**

(57) Die Erfindung betrifft ein Verfahren zur Pulsbreitensteuerung eines Gleichstrom-Umkehrstellers mit vier elektronischen Schaltern 1 bis 4 in Brückenschaltung zur Versorgung einer in der Brückendiagonale liegenden ohmischinduktiven Last 5 und eine Schaltungsanordnung zur Durchführung des Verfahrens. Dabei soll die Welligkeit des Laststromes gering sein. Bei jeder Richtung des Laststromes wird jeweils von zwei in der Brückenschaltung diagonal gegenüberliegenden elektronischen Schaltern 1, 3 bzw. 2, 4 einer getaktet und einer mit einem Dauersignal angesteuert. Eine Schaltungsanordnung zur Durchführung des Verfahrens enthält eine Polaritätserfassungsstufe 17 zur Erfassung der Polarität der Steuerspannung $U_{St}$. Die Polaritätserfassungsstufe ist über ein erstes Einschalt-Verzögerungsglied 18 mit einer Verriegelungsstufe 15 für den ersten elektronischen Schalter 1 und direkt mit dem Steuereingang für den dritten elektronischen Schalter 3 und über eine Invertierstufe 20 und ein zweites Einschalt-Verzögerungsglied 19 mit einer Verriegelungsstufe für den vierten elektronischen Schalter und direkt mit dem Steuereingang des zweiten elektronischen Schalters 2 verbunden. Damit wird eine Pausenzeit in der Ansteuerung der elektronischen Schalter 1 bis 4 bei Polaritätswechsel der Steuerspannung $U_{St}$ erreicht. Der erfindungsgemässe Gleichstrom-Umkehrsteller eignet sich beispielsweise zur Steuerung von Gleichstrommotoren.

SIEMENS AKTIENGESELLSCHAFT   Unser Zeichen
Berlin und München          VPA 79 P 3136 EUR

Verfahren zur Pulsbreitensteuerung eines Gleichstrom-
Umkehrstellers und Schaltungsanordnung zur Durchführung
des Verfahrens

Die Erfindung betrifft ein Verfahren zur Pulsbreitensteuerung eines Gleichstrom-Umkehrstellers mit vier
elektronischen Schaltern in einer an eine Versorgungsspannungsquelle angeschlossenen Brückenschaltung zur
Versorgung einer in der Brückendiagonale liegenden
ohmisch-induktiven Last, wobei jedem elektronischen
Schalter eine Freilaufdiode parallelgeschaltet ist und
wobei bei jeder Richtung des Laststromes jeweils zwei
in der Brückenschaltung diagonal gegenüberliegende
elektronische Schalter angesteuert werden und eine
Schaltungsanordnung zur Durchführung des Verfahrens.

Ein derartiges Verfahren und eine Schaltungsanordnung
zur Durchführung des Verfahrens sind beispielsweise
aus der "Siemens-Zeitschrift" 43 (1969) Heft 5,
Seite 458 bis 464 bekannt. Dabei werden zwei in der
Brückenschaltung diagonal gegenüberliegende elektronische
Schalter gleichzeitig periodisch geschlossen und geöffnet, während die beiden anderen Schalter geöffnet
bleiben. Soll sich die Richtung des Laststroms umkehren,
so werden die Transistoren der zweiten Brückendiagonale
getaktet, während die der ersten Brückendiagonale
gesperrt bleiben. Dieses Verfahren hat den Vorteil, daß
die Steuerkennlinie, d.h. der Zusammenhang zwischen
Steuerspannung und Lastspannung linear ist. Außerdem

Sid 2 Gr / 13.7.79

ist die Ansteuerung recht einfach. Nachteilig ist jedoch, daß die Lastspannung und der in die Brückenschaltung eingespeiste Strom während der Öffnungszeiten der periodisch angesteuerten elektronischen Schalter ihr Vorzeichen ändern. Während der Öffnungszeit dieser Schalter fließt der durch die Lastinduktivität aufrechterhaltene Strom nämlich über Freilaufdioden, die parallel zu jedem elektronischen Schalter liegen, in die Versorgungsspannungsquelle zurück, wobei sich die Richtung des Versorgungsstroms umkehrt. Damit ist gleichzeitig eine Spannungsumkehr an der Last verbunden. Die Welligkeit des Laststroms ist daher bei diesem Verfahren relativ groß. Durch den Wechselstromanteil des Laststroms entstehen in der Last zusätzliche Verluste, die in Wärme umgesetzt werden. Bei Motoren als Last kann z.B. der hohe Wechselstromanteil zu Pfeifgeräuschen führen.

Aufgabe der Erfindung ist es daher, ein Verfahren der eingangs genannten Art so auszugestalten, daß die Welligkeit des Laststromes geringer wird.

Diese Aufgabe wird erfindungsgemäß dadurch gelöst, daß bei jeder Richtung des Laststroms einer der elektronischen Schalter mit einem Dauersignal angesteuert wird.

Beim erfindungsgemäßen Verfahren folgt nach jeder Phase der Energieeinspeisung nicht eine Rückspeisung in die Versorgungsspannungsquelle, sondern eine Phase des Freilaufs über einen mit einem Dauersignal angesteuerten elektronischen Schalter und eine Freilaufdiode, so daß keine Umkehr des Zwischenkreisstroms und der Last-

0023622

spannung erfolgt. Der Laststrom weist daher gegenüber Gleichstrom-Umkehrstellern mit Umkehr des Zwischenkreisstroms und der Lastspannung nur die halbe Welligkeit auf. Da bei jeder Richtung des Laststroms nur zwei diagonal gegenüberliegende elektronische Schalter angesteuert werden, ist kein Brückenkurzschluß durch Überlappung der Einschaltimpulse möglich, so daß keine Sicherheitszeit zwischen den Einschaltimpulsen eingehalten werden muß. Dadurch ergibt sich eine lineare Steuerkennlinie ohne Unempfindlichkeitsbereich bei kleinen Steuerspannungen. Lediglich bei Wechsel der Polarität des Laststroms, d.h. bei Übergang der Steuerung von zwei diagonal gegenüberliegenden elektronischen Schaltern zu den beiden anderen diagonal gegenüberliegenden Schaltern muß eine Pausenzeit eingehalten werden. Damit wird sichergestellt, daß nicht zwei zwischen den Polen der Versorgungsspannungsquelle liegende elektronische Schalter gleichzeitig eingeschaltet werden. Diese Pausenzeit wirkt sich jedoch nicht störend aus, insbesondere da sie im Vergleich zur statistischen Totzeit des Gleichstromstellers vernachlässigbar klein ist. Die statistische Totzeit ergibt sich aus der Tatsache, daß ein Wechsel der Polarität des Steuerstroms erst mit dem auf den Polaritätswechsel der Steuerspannung folgenden Steuerimpuls möglich ist.

Bei einer Schaltungsanordnung zur Durchführung des Verfahrens mit vier elektronischen Schaltern in einer an eine Versorgungsspannungsquelle angeschlossenen Brückenschaltung und einer in der Brückendiagonalen angeordneten ohmisch-induktiven Last, bei der jeder elektronische Schalter von einer Freilaufdiode überbrückt ist,

0023622

bei der die Pulsbreitensteuerung durch eine Ansteuereinrichtung in Abhängigkeit von einer Steuerspannung erfolgt, und bei der bei positiver Steuerspannung der erste und der zu diesem in der Brückenschaltung diagonal angeordnete dritte elektronische Schalter und bei negativer Steuerspannung der zweite und der vierte elektronische Schalter angesteuert werden, ist vorteilhafterweise zwischen Ansteuereinrichtung und den Steuereingängen des ersten und vierten elektronischen Schalters je eine Verriegelungsstufe angeordnet, wobei die Steuerspannung dem Eingang einer Polaritätserfassungsstufe zugeführt ist, die bei positiver Steuerspannung ein Signal abgibt und wobei die Polaritätserfassungsstufe über ein erstes Einschalt-Verzögerungsglied mit einem Eingang der Verriegelungsstufe des ersten elektronischen Schalters sowie mit dem Steuereingang des dritten elektronischen Schalters verbunden ist und wobei die Polaritätserfassungsstufe über eine Invertierstufe und ein zweites Einschalt-Verzögerungsglied mit einem Eingang der Verriegelungsstufe des vierten elektronischen Schalters sowie mit dem Steuereingang des zweiten elektronischen Schalters verbunden ist. Bei Wechsel der Polarität der Steuerspannung werden dabei die Ansteuersignale für den ersten und dritten elektronischen Schalter unverzögert gesperrt, während die Ansteuersignale für den zweiten und vierten elektronischen Schalter erst nach Ablauf einer Verzögerungszeit freigegeben werden. Damit wird eine Pausenzeit der Ansteuerimpulse bei Polaritätswechsel sichergestellt.

Zweckmäßigerweise ist jde Verriegelungsstufe ein
UND-Gatter und die Polaritätserfassungsstufe ein im
Übersteuerungsbereich betriebener Operationsverstärker.

Jedes Einschaltverzögerungsglied kann zwischen seinem
Eingang und dem Bezugspotential der Schaltungsanordnung
die Reihenschaltung einer Diode und eines Kondensators
aufweisen, wobei die Diode bei positivem Eingangssignal
in Sperrichtung gepolt ist und der Verbindungspunkt
zwischen Diode und Kondensator, der zugleich den Ausgang des Verzögerungsgliedes darstellt, kann über einen
Widerstand mit der Versorgungsspannung verbunden sein.
Damit ist das Einschaltverzögerungsglied auf einfache
Weise realisiert.

Vorteilhafterweise werden einem Dreieckgenerator zwei
Vergleicherstufen nachgeschaltet, denen die Steuerspannung als Referenzspannung zugeführt ist, wobei die
erste Vergleicherstufe ein Signal abgibt, wenn die Ausgangsspannung des Dreieckgenerators unter der Steuerspannung liegt und die zweite Vergleicherstufe ein Signal
abgibt, wenn die Ausgangsspannung des Dreieckgenerators
unter der invertierten Steuerspannung liegt, wobei der
Ausgang der ersten Vergleicherstufe mit einem Eingang
der Verriegelungsstufe des ersten elektronischen
Schalters und über ein Invertierglied mit einem Eingang
der Verriegelungsstufe des vierten elektronischen
Schalters verbunden ist und wobei der Ausgang der
zweiten Vergleicherstufe mit einem Eingang der Verriegelungsstufe des vierten elektronischen Schalters
und über ein Invertierglied mit einem Eingang der Verriegelungsstufe des ersten elektronischen Schalters verbunden ist. Durch Vergleich der Ausgangsspannung des Dreieckgenerators mit der Steuerspannung werden zwei gegeneinander versetzte Impulsfolgen erzeugt, wobei die Pulsbreite jeweils von der Höhe der Steuerspannung abhängt. Über die Verriegelungsstufen werden die Impulsfolgen in Abhängigkeit von der Polarität der Steuerspannung jeweils den richtigen elektronischen Schaltern zugeführt.

Zweckmäßigerweise sind die erste und zweite Vergleicherstufe ein erster und zweiter im Übersteuerungsbereich betriebener Operationsverstärker, wobei dem nicht invertierenden Eingang des ersten Operationsverstärkers die Steuerspannung, dem invertierenden Eingang des ersten Operationsverstärkers die Ausgangsspannung des Dreieckgenerators, dem invertierenden Eingang des zweiten Operationsverstärkers die Ausgangsspannung des Dreieckgenerators und dem nicht invertierenden Eingang des zweiten Operationsverstärkers die invertierte Steuerspannung zugeführt ist. Damit können die beiden Vergleicherstufen auf einfache Weise realisiert werden.

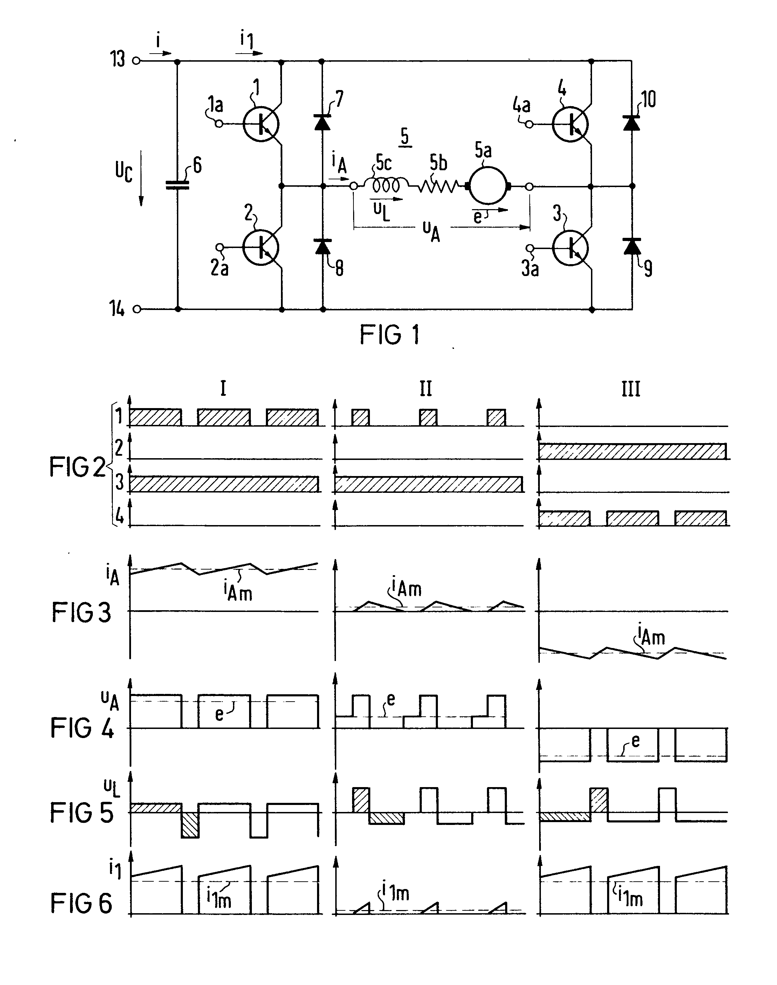

Das erfindungsgemäße Verfahren sowie eine Schaltungsanordnung zur Durchführung des Verfahrens werden im folgenden anhand der Figuren 1 bis 8 beispielhaft näher erläutert. Dabei sind in den einzelnen Figuren gleiche Bauteile mit gleichen Bezugszeichen versehen.

FIG 1 zeigt die Grundschaltung des Leistungsteils eines Gleichstrom-Umkehrstellers. Dabei sind vier Transistoren 1 bis 4 als elektronische Schalter in Brückenschaltung zwischen zwei Klemmen 13 und 14 angeordnet. An den Klemmen 13 und 14 steht eine Versorgungs-Gleichspannung $U_c$ an. Zwischen den Klemmen 13 und 14 liegt ein Kondensator 6, der als Energiespeicher dient

0023622

und Stromstöße aufnimmt bzw. abgibt. Jeder Transistor 1 bis 4 ist mit einer Freilaufdiode 7 bis 10 überbrückt, die entgegengesetzt zur Durchlaßrichtung des zugeordneten Transistors gepolt ist. Diagonal in der Brückenschaltung ist zwischen dem Verbindungspunkt der Transistoren 1 und 2 und dem Verbindungspunkt der Transistoren 3 und 4 ein Gleichstrommotor 5 als Last angeordnet. Der Gleichstrommotor 5 ist mit seinem Ersatzschaltbild mit Ankerinduktivität 5c und Ankerwiderstand 5b dargestellt.

Mit dieser Schaltungsanordnung ist ein Vierquadrantbetrieb des Motors 5 möglich, d.h. der Motor 5 kann sowohl im Rechtslauf als auch im Linkslauf angetrieben als auch gebremst werden.

Das erfindungsgemäße Verfahren zur Pulsbreitensteuerung eines Gleichstrom-Umkehrstellers nach FIG 1 ist in den Figuren 2 bis 6 dargestellt. Dabei zeigen die Figuren 2 bis 6 die Betriebsfälle "Treiben des Motors bei Rechtslauf" und "Treiben des Motors bei Linkslauf".

FIG 2 zeigt das Steuerimpulsraster für die Transistoren 1 bis 4,
FIG 3 zeigt den Stromverlauf des Motorstroms $i_A$,
FIG 4 zeigt den Spannungsverlauf der Motor-Klemmenspannung $u_A$, wobei die in der Ankerwicklung induzierte Spannung e gestrichelt eingezeichnet ist,
FIG 5 zeigt den Verlauf der Spannung $u_L$ an der Ersatz-Induktivität 5c des Motors 5,

FIG 6 zeigt den Verlauf des in die Brückenschaltung der Transistoren 1 bis 4 eingespeisten Stromes $i_1$.

Dabei fließt bei den unter I und II dargestellten Steuerimpulsrastern der Motorstrom $i_A$ in positiver Richtung, d.h. der Motor 5 wird im Rechtslauf angetrieben. Beim Steuerimpulsraster I ist der Motorstrom $i_A$ in der Nähe seines positiven Maximalwertes, beim Steuerimpulsraster II ist der Motorstrom $i_A$ verringert. Das Steuerimpulsraster III ergibt einen negativen Motorstrom $i_A$, der in der Nähe des negativen Maximalwertes liegt. Der Motor 5 wird dabei nach links angetrieben.

Wie FIG 2 zeigt, ist bei positiver Richtung des Motorstroms $i_A$, d.h. bei Antrieb des Motors im Rechtslauf, der Transistor 3 stets eingeschaltet, während der Transistor 1 getaktet wird. Die Transistoren 2 und 4 sind gesperrt. Wie FIG 4 zeigt, steht bei Vernachlässigung von Spannungsabfällen die volle Versorgungsspannung $U_C$ am Motor 5 an, solange der Transistor 1 eingeschaltet ist. Die am Motor 5 anstehende Spannung $u_A$ ruft einen in FIG 3 dargestellten ansteigenden Strom $i_A$ hervor, wobei die Steigung von der Motorinduktivität 5c abhängt. Der Motorstrom $i_A$ ist in dieser Phase mit dem in FIG 6 dargestellten, in die Brückenschaltung fließenden Strom $i_1$ identisch. Wegen der Glättungswirkung des Kondensators 6 wird der Versorgungsspannungsquelle $U_C$ der in FIG 6 gestrichelt dargestellte Mittelwert $i_{1m}$ des Stromes $i_1$ entnommen. FIG 6 zeigt den Verlauf der Spannung $u_L$ an der Motorinduktivität 5c, wobei diese Spannung $u_L$ in dieser ersten Steuerphase einen kleinen positiven Wert aufweist.

In einer anschließenden zweiten Steuerphase wird der Transistor 1 ausgeschaltet. Der Motorstrom $i_A$ wird durch die Wirkung der Motorinduktivität 5c aufrechterhalten und fließt über die Freilaufdiode 8, den Motor 5 und den Transistor 3. Durch die in diesem Kreis auftretenden Verluste ist der Motorstrom $i_A$ in dieser Steuerphase abklingend. Da der Motor für diese Stromrichtung über den Transistor 3 und die Freilaufdiode 8 kurzgeschlossen ist, wird die Motorspannung $u_A$ in der zweiten Steuerphase Null. Die wegen der konstanten Motordrehzahl gleichbleibende induzierte Spannung e wird durch die entgegengesetzte, in FIG 5 dargestellte Spannung $u_L$ an der Induktivität 5c kompensiert. Die sich anschließende dritte Steuerphase ist wieder identisch mit der ersten Steuerphase.

Beim Steuerimpulsraster I ist das Drehmoment bzw. die Drehzahl des Motors 5 relativ hoch, da die Einschaltzeit des Transistors 1, während der eine Energiezufuhr zum Motor 5 erfolgt, relativ lang ist.

Beim Steuerimpulsraster II ist die Einschaltdauer des Transistors 1 verkürzt. Damit ergibt sich eine kürzere Zeit für die Energiezufuhr. Die Drehzahl und damit auch die induzierte Spannung e des Motors 5 werden geringer. Wegen des geringeren Mittelwertes des Motorstroms $i_A$ wird dieser lückend, d.h. er sinkt in der Zeit, in der nur ein Transistor 1 oder 3 eingeschaltet ist, auf Null. Dabei wird auch die Spannung $U_L$ an der Motorinduktivität 5c Null, so daß am Motor 5 während der Lückzeit des Stromes $i_A$ die induzierte Spannung e ansteht, wie FIG 4 zeigt. Diese Spannung wird nicht kurzgeschlossen, da sie in Sperrichtung der Freilaufdioden 7 bzw. 10 gepolt ist.

Das Steuerimpulsraster III stellt schließlich einen Betriebsfall dar, bei dem der Motor 5 mit hohem Moment bzw. hoher Drehzahl in die entgegengesetzte Richtung angetrieben wird. Dabei werden anstelle der Transistoren 1 und 3 die Transistoren 2 und 4 angesteuert, wobei der Transistor 4 getaktet und der Transistor 2 mit einem Dauersignal angesteuert wird. Der Verlauf von Strömen und Spannungen entspricht dabei dem des Steuerimpulsrasters I, wobei lediglich die Polaritäten umgekehrt sind. Während der Freilaufphasen erfolgt der Stromfluß über die Freilaufdiode 9, den Motor 5 und den Transistor 2.

Mit dem erläuterten Verfahren ist es also möglich, einen Laststrom in beiden Richtungen stetig zu steuern. Solange die Transistoren 1 und 3 angesteuert werden, fließt ein positiver Laststrom $i_A$. Der Laststrom $i_A$ wird Null, wenn die Einschaltdauer des Transistors 1 Null wird. Ein Wechsel der Ansteuerung von den Transistoren 1 und 3 auf die Transistoren 2 und 4 führt zu einer Richtungsänderung des Laststromes. Da - ausgehend vom Laststrom Null - bereits eine kleine Änderung der Einschaltdauer der Transistoren 1 und 3 bzw. 2 und 4 zu einem Anstieg des Laststromes führt, tritt bei diesem Verfahren kein Unempfindlichkeitsbereich im Bereich des Laststromes Null auf. Es muß lediglich beim Übergang der Ansteuerung von den Transistoren 1 und 3 auf die Transistoren 2 und 4 eine Pausenzeit eingehalten werden, um zu verhindern, daß die Transistoren 1 und 4 oder 2 und 3 gleichzeitig eingeschaltet sind, was zu einem Kurzschluß der Versorgungsspannung führen würde. Diese Pausenzeit wirkt sich im dynamischen Verhalten als Totzeit aus, die aber wesentlich weniger störend ist als ein Unempfindlichkeitsbereich. Wie FIG 4 zeigt, wechselt beim Takten der Transistoren 1 bis 4 die Lastspannung $u_A$ nicht ihr Vorzeichen. Die Welligkeit des Laststromes $i_A$ bleibt daher klein. Ein Laststrom $i_A$ mit einem hohen Wechselstromanteil würde zu erhöhten thermischen Verlusten in der Last 5 und - insbesondere bei Motoren - in Abhängigkeit vom Frequenzbereich der Ansteuerung zu einem starken Pfeifgeräusch führen.

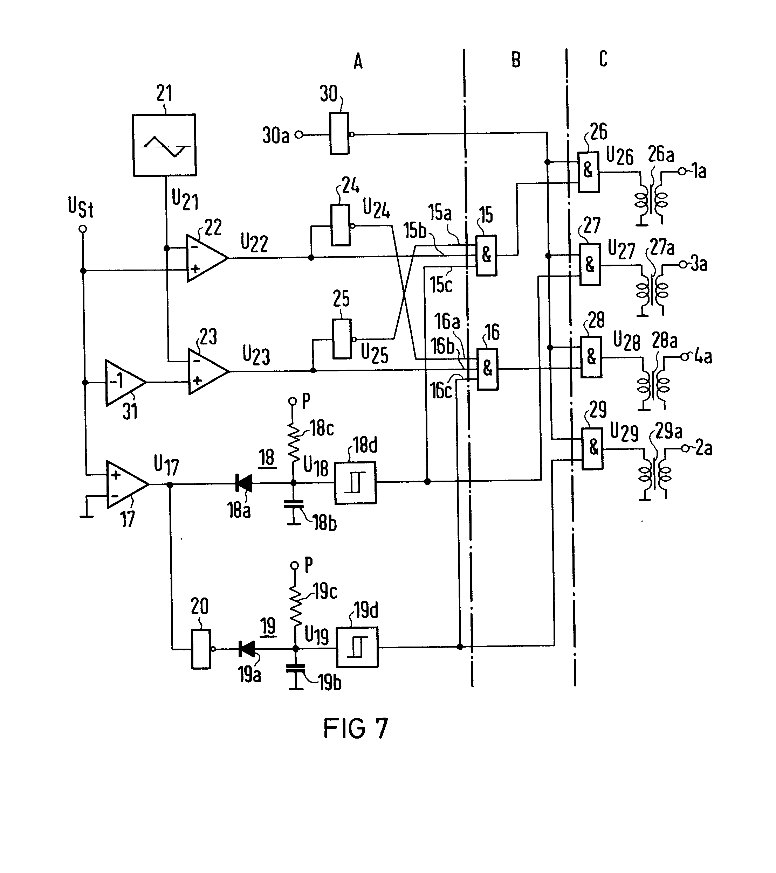

Eine Ansteuereinheit A zur Ansteuerung des Leistungsteils entsprechend FIG 1 nach dem beschriebenen Verfahren ist in FIG 7 dargestellt. Die Ansteuerschaltung A enthält einen Dreieckgenerator 21, der Dreieckimpulse mit der Form eines gleichschenkeligen Dreiecks symmetrisch zur Nullinie abgibt. Ein derartiger Dreieckgenerator ist beispielsweise aus "Halbleiter-Schaltungstechnik" von Tietze-Schenk, 3. Auflage, Seite 436 bekannt. Der Ausgang des Dreieckgenerators 21 ist mit dem invertierenden Eingang des Operationsverstärkers 22 und mit dem invertierenden Eingang des Operationsverstärkers 23 verbunden. Die Steuerspannung $U_{St}$ zur Steuerung des Laststroms liegt an nicht invertierenden Eingang des Operationsverstärkers 22 und über eine Invertierstufe 31 am nicht invertierenden Eingang des Operationsverstärkers 23. Die Operationsverstärker 22 und 23 werden im übersteuerten Bereich und damit als Komparatoren betrieben. Der Ausgang des Operationsverstärkers 22 ist mit einem Eingang des UND-Gatters 15 in der Verriegelungsstufe B und über einen Inverter 24 mit einem Eingang des UND-Gatters 16 verbunden. Der Ausgang des Operationsverstärkers 23 ist mit einem Eingang des UND-Gatters 16 und über einen Inverter 25 mit einem Eingang des UND-Gatters 15 verbunden.

Zur Erfassung der Polarität der Steuerspannung $U_{st}$ wird diese an den nicht invertierenden Eingang des Operationsverstärkers 17 angelegt, dessen invertierender Eingang an Bezugspotential liegt. Der Operationsverstärker 17 wird im übersteuerten Bereich betrieben, so daß jeder positive Wert der Steuerspannung $U_{st}$ zu einer logischen "1" am Ausgang führt. Der Ausgang des Operationsverstärkers 17 ist mit dem Einschaltverzögerungsglied 18 und über einen Inverter 20 mit dem Einschaltverzögerungsglied 19 verbunden. Jedes Einschaltverzögerungsglied 18 bzw. 19 enthält eine Reihenschaltung von Widerstand 18c bzw. 19c und Kondensator 18b bzw. 19b, die jeweils zwischen einem positiven Potential P und dem Bezugspotential der Schaltungsanordnung liegen. Der Eingang jedes Verzögerungsgliedes 18 bzw. 19 ist über eine Diode 18a bzw. 19a und mit dem Verbindungspunkt von Widerstand 18c bzw. 19c und Kondensator 18b bzw. 19b verbunden. Dabei ist die Kathode jeder Diode 18a bzw. 19a dem Eingang zugewandt. Der Verbindungspunkt zwischen Widerstand 18c bzw. 19c und Kondensator 18b bzw. 19b ist über je einen Schmitt-Trigger 18d bzw. 19d mit dem Ausgang des Einschaltverzögerungsgliedes 18 bzw. 19 verbunden. Das Ausgangssignal des Einschaltverzögerungsgliedes 18 wird einem Eingang des UND-Gatters 15 sowie einem Eingang eines UND-Gatters 27 zugeführt. Das Ausgangssignal des Einschaltverzögerungsgliedes 19 wird einem Eingang des UND-Gatters 16 sowie einem Eingang eines UND-Gatters 29 zugeführt.

Der Ausgang des UND-Gatters 15 ist mit einem Eingang des UND-Gatters 26, der Ausgang des UND-Gatters 16 ist mit einem Eingang des UND-Gatters 28 verbunden. Je ein Eingang der UND-Gatter 26 bis 29 ist mit dem Ausgang des Inverters 30 verbunden, dessen Eingang an einer Klemme 30a liegt. Der Klemme 30a kann z.B. eine Störmeldung zugeführt werden, wobei bei Anstehen einer Störmeldung alle Ansteuersignale der Ansteuereinheit A blockiert und damit alle Transistoren 1 bis 4 gesperrt werden.

Der Ausgang des UND-Gatters 26 ist der Basis 1a des Transistors 1, der Ausgang des UND-Gatters 29 der Basis 2a des Transistors 2, der Ausgang des UND-Gatters 27 der Basis 3a des Transistors 3 und der Ausgang des UND-Gatters 28 der Basis 4a des Transistors 4 zugeführt. Dabei ist zur Potentialtrennung zwischen den UND-Gattern 26 bis 29 und den Basisanschlüssen der Transistoren 1 bis 4 im Ausführungsbeispiel jeweils ein Impulsübertrager 26a - 29a angeordnet.

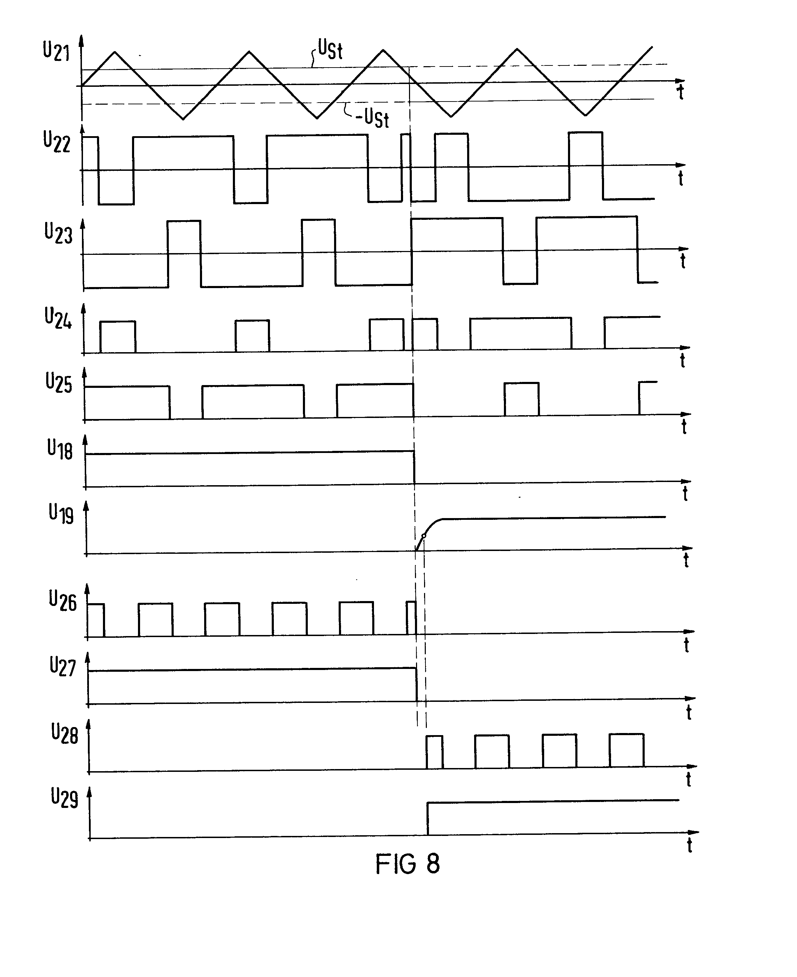

Die Funktionsweise der Schaltung nach FIG 7 wird im folgenden anhand der Impulsdiagramme nach FIG 8 erläutert. Dabei ist zunächst der Verlauf der Ausgangsspannung $U_{21}$ des Dreieckgenerators 21 in Verbindung mit der Steuerspannung $U_{St}$ und - gestrichelt - der invertierten Steuerspannung $-U_{St}$ - dargestellt. Durch Vergleich der Dreieckspannung $U_{21}$ mit der Steuerspannung $U_{St}$ mit den Operationsverstärkern 22 und 23 ergeben sich die dargestellten Spannungsverläufe für die Ausgangsspannungen $U_{22}$ und $U_{23}$ der Operationsverstärker 22 und 23. Die Schaltung ist so gewählt, daß $U_{22}$ "+1" ist, wenn die Dreieckspannung $U_{21}$ unter der Steuerspannung $U_{St}$ liegt und daß die Spannung $U_{22}$ "-1" ist, wenn die Dreieckspannung $U_{21}$ über der Steuerspannung $U_{St}$ liegt. Die Spannung $U_{23}$ ist "+1", wenn die Spannung $U_{21}$ unter der invertierten Steuerspannung liegt und "-1", wenn sie über der invertierten Steuerspannung liegt. An den Ausgängen der Invertierstufen 24 und 25 steht der mit $U_{24}$ bzw. $U_{25}$ bezeichnete Spannungsverlauf an. Eine UND-Verknüpfung der Spannungsverläufe $U_{22}$ und $U_{25}$ im UND-Gatter 15 und der Spannungsverläufe $U_{23}$ und $U_{24}$ im UND-Gatter 16 ergibt eine Impulsfolge mit Impulsen gleicher Länge und mit gleichem Abstand. Bei positiver Steuerspannung $U_{St}$ werden über das Einschalt-Verzögerungsglied 18 und das UND-Gatter 15 die Ansteuerimpulse für den Transistor 1 freigegeben und gleichzeitig wird über das Einschalt-Verzögerungsglied 18 der Transistor 3 direkt angesteuert. Bei negativer Steuerspannung $U_{St}$ werden über das Einschalt-Verzögerungsglied 19 und das UND-Gatter 16 die Ansteuerimpulse für den Transistor 4 freigegeben und gleichzeitig wird über das Einschalt-Verzögerungsglied 19 der Transistor 2 direkt angesteuert. Alle Ansteuerimpulse werden über die Verriegelungsstufe C mit den UND-Gattern 26 bis 29 geführt, wobei sie z.B. durch ein Störsignal an der Klemme 30a gesperrt werden. Die Ansteuerimpulse für die Transistoren 1 bis 4 sind in FIG 8 mit $U_{26}$ bis $U_{29}$ bezeichnet. Bei dieser Darstellung ist vorausgesetzt, daß kein Störsignal ansteht.

Ein Vergleich der Spannungsdiagramme für die Spannungen $U_{21}$ bis $U_{29}$ nach FIG 8 zeigt, daß die Breite der Ansteuerimpulse, d.h. die Einschaltdauer der Transistoren und damit auch der Laststrom mit steigender Steuerspannung $U_{St}$ zunimmt.

Um zu verhindern, daß die Transistoren 1 und 2 oder 3 und 4 gleichzeitig eingeschaltet sind, was zu einem Brückenkurzschluß führen würde, muß bei Polaritätswechsel der Steuerspannung $U_{St}$ eine Pausenzeit t einge-

0023622

halten werden, in der alle Ansteuerimpulse gesperrt sind. Diese Pausenzeit t wird durch die Einschaltverzögerungsglieder 18 und 19 erzeugt. Wenn die Spannung $U_{17}$ von "+1" nach "-1" wechselt, so kann sich der über den Widerstand 18c aufgeladene Kondensator 18b sehr schnell entladen, so daß das Ausgangssignal des Einschaltverzögerungsgliedes 18 nahezu unverzögert auf "0" geht und die Ansteuerimpulse für die Transistoren 1 und 3 gesperrt werden. Gleichzeitig wird bei Wechsel der Spannung $U_{17}$ von "+1" nach "-1" der Kondensator 19b über den Widerstand 19c aufgeladen, da am Ausgang des Inverters 20 positives Potential ansteht und somit kein Strom über die Diode 19a abfließen kann. Sobald die Spannung am Kondensator 19b einen bestimmten Wert erreicht hat, werden über die UND-Gatter 14 und 16 die Ansteuerimpulse für die Transistoren 2 und 4 freigegeben. Um einen eindeutigen Schaltzeitpunkt zu erzielen, enthalten die Einschaltverzögerungsglieder 18 und 19 am Ausgang jeweils einen Schmitt-Trigger 18d und 19d. Wie die Impulsdiagramme für die Spannungen $U_{18}$ und $U_{19}$ zeigen, werden also die Ansteuerimpulse für die Transistoren 1 und 3 bei Polaritätswechsel der Steuerspannung $U_{St}$ sofort unterbrochen, während die Steuerimpulse $U_{14}$ und $U_{16}$ für die Transistoren 2 und 4 erst nach der Verzögerungszeit t freigegeben werden, so daß kein Brückenkurzschluß auftreten kann. Der Wechsel der Ansteuerung der Transistoren 1 bis 4 bei Polaritätswechsel der Steuerspannung $U_{St}$ von minus nach plus vollzieht sich analog zum dargestellten Ablauf.

Mit der beschriebenen Schaltung kann das Impulsraster zur Ansteuerung der Transistoren 1 bis 4 nach FIG 2 auf einfache Weise erzeugt werden. Die Phasenlage und Dauer der Ansteuerimpulse hängt von der Ausgangsspannung des Dreieckgenerators 21 ab, die ohne besonderen Aufwand mit großer Genauigkeit und guter Symmetrie erzeugt werden kann.

BAD ORIGINAL

Patentansprüche

1. Verfahren zur Pulsbreitensteuerung eines Gleichstrom-Umkehrstellers mit vier elektronischen Schaltern in einer an eine Versorgungsspannungsquelle angeschlossenen Brückenschaltung zur Versorgung einer in der Brückendiagonalen liegenden ohmisch-induktiven Last, wobei jedem elektronischen Schalter eine Freilaufdiode parallelgeschaltet ist und wobei bei jeder Richtung des Laststromes jeweils zwei in der Brückenschaltung diagonal gegenüberliegende elektronische Schalter angesteuert werden, d a d u r c h   g e k e n n z e i c h n e t , daß bei jeder Richtung des Laststromes ($i_A$) einer der elektronischen Schalter (2, 3) mit einem Dauersignal angesteuert wird.

2. Schaltungsanordnung zur Durchführung eines Verfahrens nach Anspruch 1 mit vier elektronischen Schaltern in einer an eine Versorgungsspannungsquelle angeschlossenen Brückenschaltung und einer in der Brückendiagonalen angeordneten ohmisch-induktiven Last, bei der jeder elektronische Schalter von einer Freilaufdiode überbrückt ist, bei der die Pulsbreitensteuerung durch eine Ansteuereinrichtung in Abhängigkeit von einer Steuerspannung erfolgt und bei der bei positiver Steuerspannung der erste und der zu diesem in der Brückenschaltung diagonal angeordnete dritte elektronische Schalter und bei negativer Steuerspannung der zweite und der vierte elektronische Schalter angesteuert werden, d a d u r c h   g e k e n n z e i c h n e t , daß zwischen Ansteuereinrichtung (A) und den Steuereingängen (1a, 4a) des ersten und vierten elektronischen Schalters (1, 4) je eine Verriegelungsstufe (15, 16) angeordnet ist, daß die Steuerspannung ($U_{St}$) dem Eingang einer Polaritätserfassungsstufe (17) zugeführt ist, die bei positiver Steuerspannung ($U_{St}$) ein Signal abgibt, daß die Polaritätserfassungsstufe (17) über ein erstes Einschalt-Verzögerungsglied (18) mit einem Eingang (15c) der Verriegelungsstufe (15) des ersten elektronischen Schalters (1) sowie mit dem Steuereingang (3a) des dritten elektronischen Schalters (3) verbunden ist und daß die Polaritätserfassungsstufe (17) über eine Invertierstufe (20) und ein zweites Einschalt-Verzögerungsglied (19) mit einem Eingang (16c) der Verriegelungsstufe (16) des vierten elektronischen Schalters (4) sowie mit dem Steuereingang des zweiten elektronischen Schalters (2) verbunden ist.

3. Schaltungsanordnung nach Anspruch 2, d a d u r c h   g e k e n n z e i c h n e t , daß jede Verriegelungsstufe (15, 16) ein UND-Gatter ist.

4. Schaltungsanordnung nach Anspruch 2 oder 3, d a - d u r c h   g e k e n n z e i c h n e t , daß die Polaritätserfassungsstufe (17) ein im Übersteuerungsbereich betriebener Operationsverstärker (17) ist.

5. Schaltungsanordnung nach einem der Ansprüche 2 bis 4, d a d u r c h   g e k e n n z e i c h n e t , daß jedes Einschaltverzögerungsglied (18, 19) zwischen seinem Eingang und dem Bezugspotential der Schaltungsanordnung die Reihenschaltung einer Diode (18a, 19a) und eines Kondensators (18b, 19b) aufweist, wobei die Diode (18a, 19a) bei positivem Eingangssignal in Sperrrichtung gepolt ist, und daß der Verbindungspunkt zwischen Diode (18a, 19a) und Kondensators (18b, 19b), der zugleich den Ausgang des Verzögerungsgliedes (18, 19)

0023622

darstellt, über einen Widerstand (18c, 19c) mit der Versorgungsspannung (P) verbunden ist.

6. Schaltungsanordnung nach einem der Ansprüche 2 bis 5, d a d u r c h   g e k e n n z e i c h n e t , daß einem Dreieckgenerator (21) zwei Vergleicherstufen (22, 23) nachgeschaltet sind, denen die Steuerspannung ($U_{St}$) als Referenzspannung zugeführt ist, wobei die erste Vergleicherstufe (22) ein Signal abgibt, wenn die Ausgangsspannung des Dreieckgenerators (21) unter der Steuerspannung ($U_{St}$) list und die zweite Vergleicherstufe (23) ein Signal abgibt, wenn die Ausgangsspannung des Dreieckgenerators (21) unter der invertierten Steuerspannung ($U_{St}$) liegt, daß der Ausgang der ersten Vergleicherstufe (22) mit einem Eingang (15b) der Verriegelungsstufe (15) des ersten elektronischen Schalters (1) und über ein Invertierglied (24) mit einem Eingang (16a) der Verriegelungsstufe (16) des vierten elektronischen Schalters (4) verbunden ist und daß der Ausgang der zweiten Vergleicherstufe (23) mit einem Eingang (16b) der Verriegelungsstufe (16) des vierten elektronischen Schalters (4) und über ein Invertierglied (25) mit einem Eingang (15a) der Verriegelungsstufe (15) des ersten elektronischen Schalters (1) verbunden ist.

7. Schaltungsanordnung nach Anspruch 6, d a d u r c h   g e k e n n z e i c h n e t , daß die erste und zweite Vergleicherstufe (22, 23) ein erster und zweiter im Übersteuerungsbereich betriebener Operationsverstärker sind, wobei dem nicht invertierenden Eingang des ersten Operationsverstärkers (22) die Steuerspannung ($U_{St}$), dem invertierenden Eingang des ersten Operationsverstärkers (22) die Ausgangsspannung ($U_{21}$) des Dreieckgenerators (21), dem invertierenden Eingang des zweiten Operationsver-

stärkers (23) die Ausgangsspannung ($U_{21}$) des Dreieckgenerators (21) und dem nicht invertierenden Eingang
des zweiten Operationsverstärkers (23) die invertierte Steuerspannung ($-U_{St}$) zugeführt ist.

FIG 1

FIG 2 {

FIG 3

FIG 4

FIG 5

FIG 6

I          II          III

0023622

FIG 7

0023622

79 P 3136

FIG 8

Europäisches
Patentamt

**EUROPÄISCHER RECHERCHENBERICHT**

0023622
Nummer der Anmeldung

EP 80 10 4109.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 233 188 (KIEPE BAHN ELEKTRIK) <br> * Anspruch 2 * <br> -- | 1 |
| X | CH - A - 504 134 (GENERAL ELECTRIC CO.) <br> * Spalte 4, Zeile 45 und ff. * <br> -- | 2-7 |
|  | GB - A - 1 476 142 (GENERAL ELECTRIC CO.) <br> -- | 3,5 |
| A | DE - A - 2 317 981 (STE HONEYWELL BULL) <br> ---- |  |

**KLASSIFIKATION DER ANMELDUNG (Int.Cl.3)**

H 02 P    7/28

**RECHERCHIERTE SACHGEBIETE (Int. Cl.3)**

H 02 M    3/155

H 02 P    5/00

H 02 P    7/00

H 02 P    13/32

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie,  übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 10-11-1980 | GESSNER |

EPA form 1503.1  06.78